# EUROPEAN PATENT APPLICATION

(11) **EP 3 587 991 A1**
(43) Date of publication of application: **01.01.2020**
(21) Application number: 18180331.3
(22) Date of filing: 28.06.2018
(51) Int. Cl.: F28F 19/02, F28F 21/08, F28F 9/00

(54) **EXHAUST GAS RECIRCULATION (EGR) COOLER**

(71) Applicant: Valeo Termico S.A., 50011 Zaragoza (ES)
(72) Inventor: FERNANDEZ MARTINEZ, Roberto, 50011 ZARAGOZA (ES); PUERTOLAS, Rosa, 50011 ZARAGOZA (ES); DE LA FUENTE, José Antonio, 50011 ZARAGOZA (ES); GOMEZ, Cristina, 50011 ZARAGOZA (ES)
(74) Representative: Tran, Chi-Hai

(57) **Abstract**

A heat exchanger system, wherein at least one of tubular elements, fin elements and auxiliary elements configuring the heat exchanger system are formed of a multi-layered laminar structure that includes at least one protective layer applied on at least one of the major surfaces of an aluminum core and at least one brazing layer applied on the major surface of at least one of the aluminum core and the protective layer. Each tubular element is configured by forming the multi-layered laminar structure and fusion joining end portions of the multi-layered laminar structure by electro welding. The tubular elements so formed are fusion joined with at least one of the fin elements and the auxiliary elements by brazing to configure at least a portion of heat exchanger system that withstands high temperature and corrosive exhaust gases of a vehicle.

## Description

The present disclosure relates to an Exhaust Gas Recirculation (EGR) system, particularly, the present disclosure relates to an Exhaust Gas Recirculation (EGR) cooler for a vehicle.

### Definition:

Major surface - is a surface of a laminar structure having maximum surface area, specifically, either one of top or bottom surface;
An exhaust gas recirculation (EGR) system, herein after referred to as "system" recirculates a portion of an engine's exhaust gas back to the engine's cylinders. By recirculating the engine's exhaust gas back to the engine's cylinder, the peak in-cylinder temperatures are regulated, specifically lowered to reduce formation of NOx gases. Specifically, in case of gasoline engines, inert exhaust displaces amount of combustible matter in cylinders of the gasoline engine, thereby reducing peak in-cylinder temperatures. In case of diesel engines, exhaust gas replaces some of excess oxygen in pre-combustion mixture entering cylinders of diesel engine, thereby reducing peak in-cylinder temperatures. As a result, re-circulation of the engine's exhaust gas back to the engine reduces the amount of NOₓ gases produced as combustion chamber does not reach the temperatures required for excess levels of NOₓ gases to form. The exhaust gas recirculation (EGR) system may further include a heat exchanger such as for example an exhaust gas recirculation (EGR) cooler that cools the exhaust gas before the exhaust gas is re-circulated into an intake manifold of the engine. The EGR cooler further reduces the combustion chamber temperature, thereby preventing valve clatter, detonation and further reduces NOₓ formation. As a result, the exhaust gas recirculation (EGR) system substantially reduces vehicle emissions to enable meeting stringent vehicular exhaust emission norms prevalent in most parts of the world.

However, the various elements of the "system", particularly, the EGR cooler have to withstand high exhaust gas temperatures in the range of 400 to 900 C. Also, the elements of the "system" have to handle exhaust gas condensates that are inherently formed during operation of the EGR cooler, wherein the exhaust gas condensates, due to presence of chlorides may have pH of 2 and even less, sometimes 0.8. As such the exhaust gas condensates are acidic and corrosive in nature. Such high temperatures and corrosive conditions to which the elements of the "system" are often subjected to are detrimental for the elements and may cause damage thereto due to corrosion. More specifically, corrosion of the critical elements of the "system", such as for example, heat exchange elements adversely affect efficiency and performance of the heat exchanger and also reduce service life of the heat exchanger. Considering this, the heat exchanger elements are generally configured of corrosion resistant stainless steel and as such are capable of withstanding high temperatures and acidic environments during the vehicle's life time. However, use of stainless steel for configuring the elements of the "system", render such elements heavier and expensive. The heat exchangers formed of light weight material, for example, aluminium heat exchangers with elements thereof joined by electro-welding is known and use of such aluminium heat exchangers as radiators or condensers is also known. However, such aluminum heat exchangers fail to simultaneously withstand high temperatures and corrosive environment and as such are not suitable for use as EGR coolers that are simultaneously subjected to high temperature and corrosive environments. Further, conventional aluminium heat exchangers are complex to configure, expensive and inefficient. Therefore, there is a need for heat exchangers that can be used as exhaust gas recirculation (EGR) cooler, and that can be so configured of light weight material to render it light weight, inexpensive, corrosion resistant, and that can be conveniently configured by using joining methods that do not need filler material.

An object of the present invention is to provide a heat exchanger system formed of multi-layered laminar structures with aluminum core that obviates the drawbacks associated with conventional heat exchangers of stainless steel that are heavier and expensive.

Another object of the present invention is to provide a heat exchanger system formed of multi-layered laminar structures with aluminum core that is simple and convenient to manufacture, efficient in operation and requires less maintenance.

Still another object of the present invention is to provide a heat exchanger system formed of multi-layered laminar structures with aluminum core that renders the EGR cooler lightweight, inexpensive and corrosion resistant.

Yet another object of the present invention is to provide a heat exchanger system formed of multi-layered laminar structures with aluminum core that can be conveniently joined by electro-welding and brazing without need of filler material, particularly, the different layers of the multi-layered laminar structure are preserved and protected against damage due to mixing of filler material with the different layers during welding, thereby preserving the effectiveness of each layer.

Still another object of the present invention is to provide a heat exchanger system that can be formed by fusion joining multi-layered laminar structures with aluminum core without requiring any filler material, thereby eliminating the drawbacks associated with conventional fusion joining methods that require use of filler material.

Yet another object of the present invention is to provide an exhaust gas recirculation (EGR) cooler that can be configured from multi-layered laminar structures with aluminum core and that can be conveniently retrofitted in existing exhaust gas recirculation (EGR) system without involving much modification.

In the present description, some elements or parameters may be indexed, such as a first element and a second element. In this case, unless stated otherwise, this indexation is only meant to differentiate and name elements which are similar but not identical. No idea of priority should be inferred from such indexation, as these terms may be switched without betraying the invention. Additionally, this indexation does not imply any order in mounting or use of the elements of the invention.

A heat exchanger system is disclosed in accordance with an embodiment of the present disclosure. At least one of the tubular elements, fin elements and auxiliary elements configuring the heat exchanger system are formed of a multi-layered laminar structure. The multi-layered laminar structure includes at least one protective layer applied on at least one of the major surfaces of an aluminum core and at least one brazing layer applied on the major surface of at least one of the aluminum core and the protective layer. Each tubular element is configured by forming the multi-layered laminar structure and fusion joining end portions of the multi-layered laminar structure by electro-welding. The tubular elements so formed are fusion joined with at least one of the fin elements and the auxiliary elements by brazing to configure at least a portion of heat exchanger system that withstands high temperature and corrosive exhaust gases of a vehicle.

In accordance with another embodiment, the tubular elements, the fin elements and the auxiliary elements are simultaneously fusion joined with each other when arranged in a desired configuration and subjected to the Controlled Atmosphere Brazing.

Specifically, in the desired configuration, at least one of the abutting elements is formed of the multi-layered laminar structure such that brazing layer of the multi-layered laminar structure from which at least one of the abutting elements is formed of facilitates forming of fusion joint by brazing between the abutting elements.

Generally, the tubular elements, the fin elements and the auxiliary elements are fusion joined with each other by brazing without requiring filler material and connection between other remaining elements such as brackets is configured by welding such as laser welding.

Generally, the multi layered laminar structure configuring at least few elements of the heat exchanger system is so configured that aluminum core along with the at least one protective layer is sandwiched between the brazing layers.

In accordance with an embodiment of the invention, the multi layered laminar structure configuring at least few elements of said heat exchanger system is so configured that the protective layer is laminated on either one of the major surfaces of the aluminum core and the aluminum core along with the protective layer is sandwiched between the brazing layers.

Alternatively, the multi layered laminar structure configuring at least few elements of said heat exchanger system is so configured that the protective layer is laminated on both the opposite major surfaces of the aluminum core and the aluminum core along with the protective layers is sandwiched between the brazing layers.

In accordance with an embodiment of the present invention, a heat exchanger core is formed by fusion joining plates and fin elements by brazing without requiring filler material, wherein each plate is formed from the multi-layered laminar structure and the heat exchanger core so formed is received inside an enclosure configured by fusion joining said auxiliary elements by brazing.

A method for configuring a heat exchanger system is disclosed in accordance with an embodiment of the present invention, the method includes the steps of forming at least one of tubular elements, fin elements and auxiliary elements from the multi-layered laminar structure, specifically, configuring the tubular element by forming the multi-layered laminar structure and fusion joining end portions of the multi-layered laminar structure by electro welding, thereafter, arranging the tubular elements, the fin elements and the auxiliary elements in a desired pre-weld configuration in which these elements are to be fusion joined with respect to each other such that brazing layers of the multi layered laminar structure from which at least one of the abutting elements are configured of facilitate forming fusion joint between the abutting elements when subjected to heat, and finally, subjecting the tubular elements, the fin elements and the auxiliary elements arranged in the desired pre-weld configuration to a Controlled Atmosphere Brazing, such that the brazing layers fuse by heat for forming fusion joints between the abutting elements in one go.

Still further, the step of arranging said tubular elements, fin elements and auxiliary elements in the desired pre-weld configuration further involves intermediate steps of fin insertion, tube fluxing, core stacking and assembly.

In accordance with another embodiment, the method involves the steps of forming at least one of plates, fin elements and auxiliary elements from the multi-layered laminar structure, arranging the plates along with the fin elements and the auxiliary elements in a desired pre-weld configuration in which these elements are to be fusion joined with respect to each other such that brazing layers of the multi-layered laminar structure from which at least one of the abutting elements are configured of facilitate forming of fusion joint between the abutting elements when subjected to heat and subjecting the plates, the fin elements and the auxiliary elements arranged in the pre-weld configuration to a Controlled Atmosphere Brazing, such that the brazing layers fuse by heat for forming fusion joints between the abutting elements in one go.

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
**FIGURE 1a** illustrates a schematic representation depicting a multi-layered laminar structure with an aluminum core used for configuring at least few elements of heat exchanger system, particularly, an Exhaust Gas Recirculation (EGR) cooler in accordance with an embodiment of the present invention;
**FIGURE 1b** illustrates the various steps involved in configuring a tubular element from the multi-layered laminar structure of **FIGURE 1a****;**
**FIGURE 2a** and **FIGURE 2b** depict different isometric views of an Exhaust Gas Recirculation (EGR) cooler in an assembled configuration in accordance with an embodiment of the present invention;
**FIGURE 3a** depicts an isometric exploded view of the EGR cooler of **FIGURE 2a****,** wherein critical elements of the EGR cooler, particularly, a heat exchange core thereof is configured by fusion joining a plurality of tubular elements formed from the multi-layered laminar structure with aluminum core of **FIGURE 1a** with fin elements, also is depicted an enlarged view of the tubular element with fin elements received therein;
**FIGURE 3b** depicts an isometric view of the tubular element of **FIGURE 3a** with the fin elements depicted in pulled out configuration with respect to the tubular element, for the sake of explaining assembly of the fin elements inside the tubular element; and
**FIGURE 4** depicts an exploded view of an EGR cooler in accordance with another embodiment of the present invention, wherein critical elements of the EGR cooler, particularly, a heat exchange core thereof is configured by fusion joining plates formed from the multi-layered laminar structure with aluminum core of **FIGURE 1a** with fin elements, also is depicted an enlarged view of one of the plate.

It must be noted that the figures disclose the invention in a detailed enough way to be implemented, said figures helping to better define the invention if needs be. The invention should however not be limited to the embodiment disclosed in the description.

An Exhaust Gas Recirculation (EGR) cooler in accordance with an embodiment of the present invention is disclosed, wherein heat exchange elements thereof are formed by joining ends of a multi-layered laminar structure by electro-welding and the heat exchange elements so formed are fusion joined with other elements such as fin elements and auxiliary elements by brazing. Although, as per the disclosure made in the current specification, the critical elements of the Exhaust Gas Recirculation (EGR) cooler, particularly, tubular heat exchanger elements are formed of the multi-layered laminar structure, however, other heat exchanger systems not limited to Exhaust Gas Recirculation (EGR) cooler and elements thereof that are required to withstand corrosive and high temperature environments and that are intended for use in vehicles and hence are required to be light in weight can be configured from the multi-layered laminar structure.

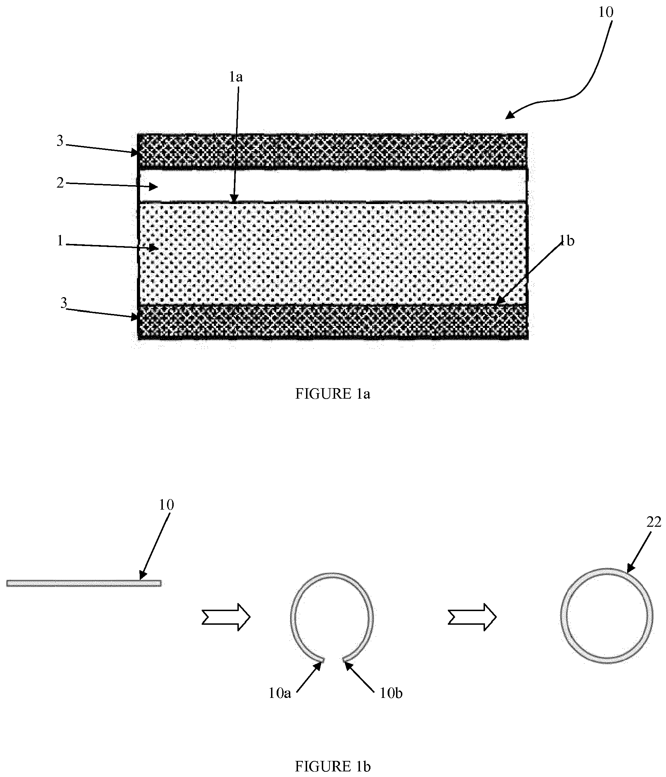

**FIGURE 1a** depicts a schematic representation of a multi-layered laminar structure **10** with an aluminum core used for configuring elements of a heat exchanger system **100,** such as for example, an Exhaust Gas Recirculation (EGR) cooler in accordance with an embodiment of the present invention. Referring to the **FIGURE 1a****,** the multi-layered laminar structure **10** includes an aluminum core **1,** at least one protective layer **2** and at least one brazing layers **3.** In accordance with a preferred embodiment, critical elements of the Exhaust Gas Recirculation (EGR) cooler are configured from the multi-layered laminar structure **10.** Particularly, each tubular element **22** is configured by forming the multi-layered laminar structure **10** and fusion joining end portions **10a** and **10b** thereof by electro-welding. The tubular element 22 so configured is leak tight. **FIGURE 1b** illustrates the steps involved in configuring the tubular element **22** from the multi-layered laminar structure **10.** The tubular elements **22** so configured are in turn fusion joined to fin elements **30** for configuring a heat exchanger core. Specifically, the heat exchanger core is configured by fusion joining a plurality of elements, wherein at least one of the abutting elements are formed of the multi-layered laminar structure **10** with aluminum core such that brazing layer **3** of the multi-layered laminar structure **10** from which at least one such abutting elements are formed of facilitate fusion joining, particularly, brazing between the abutting elements without requiring any filler material. As a result, the heat exchanger core so configured eliminates use of filler material for configuring the fusion joints and also eliminates drawbacks associated with conventional fusion joining processes that necessarily require filler material for configuring the fusion joints. As such, the heat exchanger core can be conveniently configured by fusion joining elements formed from the multi-layered laminar structure **10** with aluminum core by brazing and without requiring filler material. The use of the multi layered laminar structure **10** for configuring the elements of the heat exchanger system **100** has several other advantages. For example, during brazing of the elements configured of the multi-layered laminar structure **10,** the protective layer **2** prevents diffusion of silicon from the brazing layer **3** to the aluminum core **1,** thereby protecting the aluminum core **2** against corrosion. Also, the protective layer **2** prevents corrosion penetration to the aluminum core **1.**

As the multi layered laminar structure **10** is light weight, corrosion resistant and can be conveniently fusion joined by using brazing as fusion joining method without requiring any filler material, the elements of the Exhaust Gas Recirculation (EGR) cooler configured thereby and the Exhaust Gas Recirculation (EGR) cooler configured by fusion joining the elements formed from the multi layered laminar structures **10** are also light weight, corrosion resistant and conveniently manufacture-able. The heat exchanger core so configured from the multi-layered laminar structure **10** can withstand adverse conditions such as high temperatures and corrosive conditions to which the Exhaust Gas Recirculation (EGR) cooler is often subjected to during service life thereof.

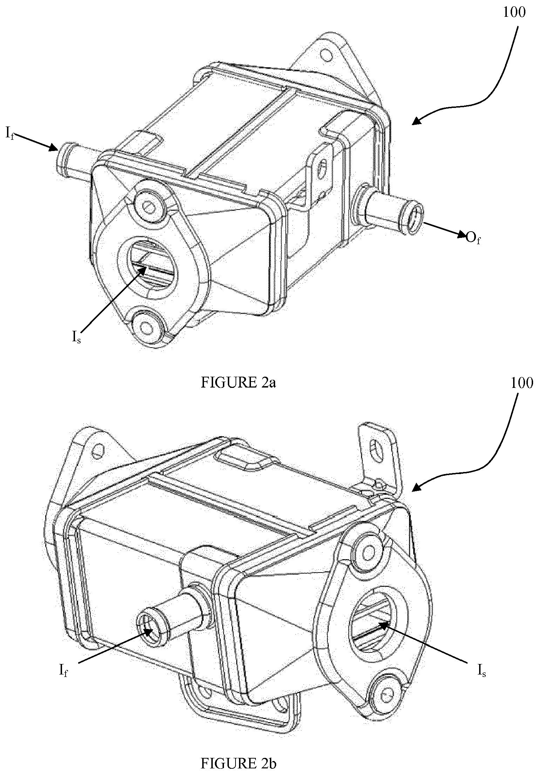

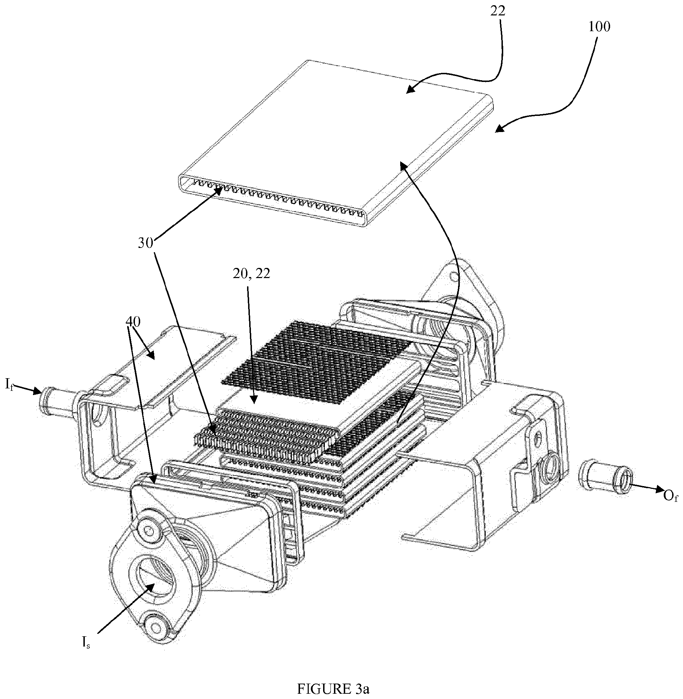

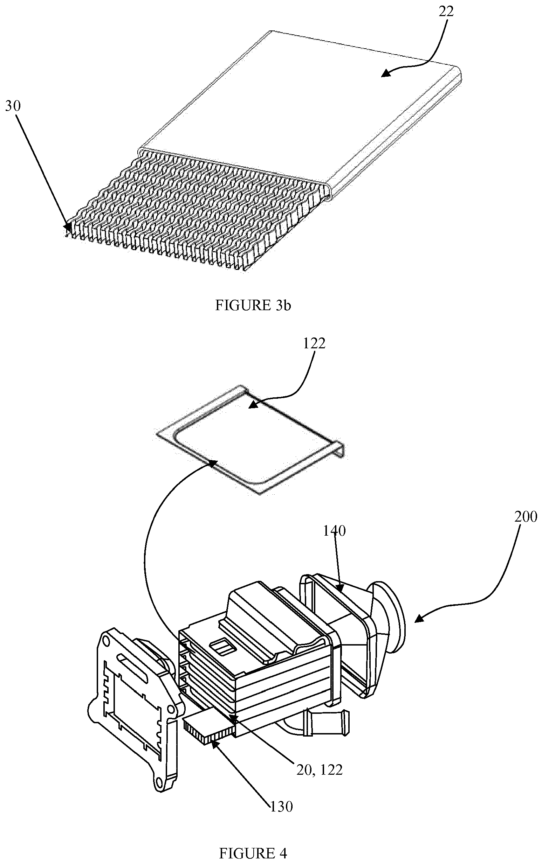

Referring to **FIGURES 2a, 2b** and **3a****,** the Exhaust Gas Recirculation (EGR) cooler includes inlet I_{f} and outlet O_{f} for ingress and egress of first heat exchange fluid and inlet Iₛ and outlet Oₛ for ingress and egress of second heat exchange fluid. The Exhaust Gas Recirculation (EGR) cooler further includes heat exchange elements **20** in form of the tubular elements 22, fin elements **30** and auxiliary elements **40.** The heat exchange elements **20** facilitates circulation of first and second heat exchange fluid in adjacent yet separated spaces, thereby allowing heat exchange between first and second heat exchanging fluids, wherein first heat exchange fluid extracts heat from second fluid to cause cooling of the second heat exchange fluid. The fin elements **30** are configured in either one of the separated spaces configured by the heat exchange elements 20 and further facilitate heat exchange between the first heat exchange fluid and the second heat exchange fluid by retarding fluid flow of the heat exchange fluid through either of the separated spaces. The tubular elements **22** are fusion joined with the fin elements **30** by brazing for configuring the heat exchanger core that is received inside an enclosure formed by fusion joining the auxiliary elements **40** by brazing. **FIGURE 3b** depicts an isometric view of the tubular element **22** with the fin elements **30** depicted in pulled out configuration with respect to the tubular element **22** for the sake of explaining assembly between the fin elements **30** and the tubular element **22.**

In accordance with a preferred embodiment, critical elements of the Exhaust Gas Recirculation (EGR) cooler such as the tubular elements **22** that are often in direct contact with the high temperature exhaust gases and corrosive condensates during operation of the Exhaust Gas Recirculation (EGR) cooler are configured of the multi layered laminar structures **10** with aluminum core. As a result, these critical elements are particularly resistant to corrosion and the service life of the Exhaust Gas Recirculation (EGR) cooler is enhanced. Also, as these critical elements have direct impact on the thermal efficiency and performance of the Exhaust Gas Recirculation (EGR) cooler, such configuration of the Exhaust Gas Recirculation (EGR) cooler, wherein the critical elements thereof are formed of the multi layered laminar structures **10** with aluminum core, substantially enhances the efficiency and performance of the Exhaust Gas Recirculation (EGR) cooler. Also, the EGR cooler of the present invention as illustrated in **FIGURE 2a** and **FIGURE 2b** configured from the multi-layered laminar structure **10** with aluminum core are light in weight as compared to similar conventional EGR coolers configured from stainless steel, also, the vehicles configured with such EGR coolers of the present invention exhibit comparatively better fuel economy due to reduced loads.

Again referring to **FIGURE 1a****,** the at least one protective layer **2** is applied on, specifically, laminated on at least one of the major surfaces **1a** and **1b** of the aluminum core **1** and prevents corrosion penetration to the aluminum core **1** either from one side or both sides depending on whether the protective layer **2** is applied on one major surface or both major surfaces of the aluminum core **1.** Any method can be used for applying the protective layer over the aluminum core **1.** Generally, the protective layer is aluminum based and can be either one of 3000 series, 1000 series. Specifically, the protective layer includes an aluminum weight percentage which is at least 80 percent, preferably at least 90 percent and preferably at least 95 percent. The thickness of the protective layer **2** is approximately 16 percent of total thickness of the multi-layered laminar structure **10,** wherein the total thickness of the multi-layered laminar structure **10** is in the range of **600** to **1100** µm. Specifically, the protective layer 2 has a thickness of at least 100 µm, preferably at least 120 µm. Plurality of protective layers, each having different compositions and thickness can be applied or laminated on the aluminum core **1.**

The aluminum core **1** along with the at least one protective layer **2** is sandwiched between the brazing layers **3.** The protective layer **2** is laminated only on either one of the major surfaces **1a** or **1b** of the aluminum core **1** and the aluminum core **1** along with the protective layer **2** is sandwiched between the brazing layers **3.** As illustrated in **FIGURE 1a****,** the protective layer **2** is laminated on the major surface **1a** of the aluminum core **1** and the aluminum core **1** along with the protective layer **2** is sandwiched between the brazing layers **3.** Alternatively, the protective layer **2** is laminated on both opposite major surfaces **1a** and **1b** of the aluminum core and the aluminum core **1** along with the protective layers **2** is sandwiched between the brazing layers **3.** Such configurations facilitate brazing of the elements formed of the multi layered structure **10** to other elements from both sides thereof. With such configurations the brazing layer **3** is present on both sides of the element configured from the multi layered structure **10,** thereby facilitating brazing on both sides of the element. In some cases, brazing layer **3** is applied to the free major surface of either one of the aluminum core **1** or the protective layer **2,** the elements formed of such multi layered structure **10** can be brazed to other elements from only one side thereof on which the brazing layer **3** is present. The ratio of the thickness of the brazing layer **3** to the thickness of the protective layer **2** ranges from 0.2 to 1. The thickness of the brazing layer **3** is at least 4 percent and at most 10 percent of total thickness of the multi-layered laminar structure **10,** wherein the total thickness of the multi-layered laminar structure **10** is in the range of **600** to **1100** µm. In accordance with an embodiment, the thickness of the brazing layer is 30 µm. The brazing material has a melting temperature less than that of the elements configuring the Exhaust Gas Recirculation (EGR) cooler, thereby facilitating joining of the various elements of the Exhaust Gas Recirculation (EGR) cooler by brazing. As, the composition of the brazing material is not the subject matter of the present invention and is well known therefore the composition of the brazing material is not disclosed in details for the sake of brevity of the present document.

Except for fusion joint between end portions **10a** and **10b** of the formed multi layered laminar structure **10** that are joined by electro-welding, the brazing layer **3** facilitates configuring of fusion joints between elements formed of the multi-layered laminar structure **10** by brazing without requiring filler material. Specifically, the brazing layer **3** facilitates configuring of fusion joints between the tubular elements **22** and the fin elements **30** by brazing without requiring filler material. In some cases the brazing layer **3** also facilitates configuring of the fusion joint between the auxiliary elements **40** for forming the enclosure. Similarly, the brazing layer **3** facilitates configuring of fusion joints between the heat exchanger elements **20,** particularly, the plates **122** formed of multi layered laminar structure **10** and fin elements **130** that are joined alternately to each other as illustrated in **FIGURE 4** for configuring a heat exchanger core. The heat exchanger core is in turn received inside an enclosure configured by joining the auxiliary elements **140,** such as the tank elements in accordance with another embodiment of the present invention, and as illustrated in **FIGURE 4****.**

Also, at least one of the abutting elements that can be either one of the heat exchange elements **20,** the fin elements **30, 130** and the auxiliary elements **40, 140** and that are required to be joined to each other are formed of the multi layered laminar structures **10** with aluminum core such that the corresponding brazing layer **3** facilitates fusion joining between these elements without requiring filler material. With elimination of the filler material for configuring fusion joints between the heat exchange elements **20** that can be either one of the tubular elements **22** and plates **122,** the fin elements **30, 130** and the auxiliary elements **40, 140,** the composition of the different layers of the multi-layered laminar structure **10** from which these elements are formed is preserved. Specifically, the different layers of the multi-layered laminar structure **10** are preserved and protected against damage due to mixing of filler material with the different layers of the multi-layered laminar structure **10** during welding. More specifically, with elimination of the filler material, the protective layer **2** remains intact and efficiently perform its function of preventing corrosion penetration to the aluminum core **1.** Such configuration of the elements made of the multi layered laminar structure **10,** further eliminates the drawbacks associated with conventional joining methods, that require skilled labor, and are unsafe, capital intensive, time intensive and labor intensive.

In accordance with an embodiment, the tubular elements **22** are formed by fusion joining the end portions **10a** and **10b** of the formed multi-layered laminar structure **10** by subjecting the end portions **10a** and **10b** to electro-welding . Later, the tubular elements **22** so formed are subjected to brazing with other elements such as fin elements **30** and auxiliary elements **40** by subjecting these elements to Controlled Atmosphere Brazing. With such configuration of the tubular elements **22,** the tubular elements **22** can be leak checked before subjecting to brazing with other elements such as the fin elements **30** and the auxiliary elements **40.** With such configuration, the number of components that undergo Controlled Atmosphere Brazing in the furnace is reduced as compared to when the tubular elements **22** are formed by fusion joining two separate plate elements by brazing along with brazing between the other elements such as the fin elements **30** and the auxiliary elements **40** in the furnace. Accordingly, with less number of components arranged in the Controlled Atmosphere Brazing furnace for brazing, there are less chances of misalignment between the elements and improper brazing.

Alternatively, the method includes the steps of forming at least one of heat exchange elements **20** from the multi-layered laminar structure **10.** The heat exchange element is either one of a plate **24** formed from the multi-layered laminar structure **10** and the tubular element **22** configured by forming and fusion joining, particularly electro-welding end portions of the multi-layered laminar structure **10.** Thereafter, arranging the heat exchanger elements, for example, the tubular elements **22,** fin elements **30** and the auxiliary elements **40** in a desired pre-weld configuration in which these elements are to be fusion joined with respect to each other such that brazing layers **3** of the multi layered laminar structure **10** from which at least one of the abutting elements are configured of facilitates forming fusion joint, particularly brazing between the abutting elements when subjected to heat. Finally, subjecting the tubular elements **22,** the fin elements **30** and the auxiliary elements **40** arranged in the pre-weld configuration to Controlled Atmosphere Brazing (CAB), such that the brazing layers **3** fuse by heat for forming fusion joints between the abutting elements in one go for configuring at least a portion of the heat exchanger without requiring any filler material. Such method of configuring the tubular elements **22** by fusion joining end portions of the formed multi-layered laminar structure **10** by electro-welding before subjecting the tubular elements 22 along with the fin elements **30** and auxiliary elements **40** to Controlled Atmosphere Brazing (CAB) provides the opportunity of performing of leak test on the tubular elements **22.** By performing of leak test on the tubular elements 22, the quality of the heat exchanger **100** is improved and the rejection rates are considerably reduced as the tubular elements **22** that are essential elements of the heat exchanger **100** can be leak tested before subjecting to brazing with other elements in the Controlled Atmosphere Brazing furnace.

Several modifications and improvement might be applied by the person skilled in the art to the heat exchanger system as defined above, as long as at least one of the tubular elements, fin elements and auxiliary elements configuring the heat exchanger system are formed of a multi-layered laminar structure that includes at least one protective layer applied on at least one of the major surfaces of an aluminum core and at least one brazing layer applied on the major surface of at least one of the aluminum core and the protective layer and each tubular element is configured by forming the multi-layered laminar structure and fusion joining end portions of the multi-layered laminar structure by electro welding, and the tubular elements so formed are fusion joined with at least one of the fin elements and the auxiliary elements by brazing to configure at least a portion of heat exchanger system that withstands high temperature and corrosive exhaust gases of a vehicle.

In any case, the invention cannot and should not be limited to the embodiments specifically described in this document, as other embodiments might exist. The invention shall spread to any equivalent means and any technically operating combination of means.

## Claims

1. A heat exchanger system (100), wherein at least one of tubular elements (22), fin elements (30) and auxiliary elements (40) configuring said heat exchanger system (100) are formed of a multi-layered laminar structure (10) comprising at least one protective layer (2) applied on at least one of the major surfaces (1a, 1b) of an aluminum core (1) and at least one brazing layer (3) applied on the major surface of at least one of said aluminum core (1) and said protective layer (2),
**characterized in that** each tubular element (22) is configured by forming said multi-layered laminar structure (10) and fusion joining end portions (10a, 10b) of said multi-layered laminar structure (10) by electro welding, said tubular elements (22) so formed are adapted to be fusion joined with at least one of said fin elements (30) and said auxiliary elements (40) by brazing to configure at least a portion of heat exchanger system (100) that is adapted to withstand high temperature and corrosive exhaust gases of a vehicle.

2. The heat exchanger system (100) as claimed in any of the preceding claims, wherein, said tubular elements (22), said fin elements (30) and said auxiliary elements (40) are adapted to be simultaneously fusion joined with each other when arranged in a desired configuration and subjected to said Controlled Atmosphere Brazing.

3. The heat exchanger system (100) as claimed in any of the preceding claims, wherein in said desired configuration, at least one of said abutting elements is formed of said multi-layered laminar structure (10) such that brazing layer of said multi-layered laminar structure (10) from which at least one of the abutting elements is formed of facilitates in forming of fusion joint by brazing between said abutting elements.

4. The heat exchanger system (100) as claimed in any of the preceding claims, wherein said tubular elements (22), said fin elements (30) and said auxiliary elements (40) are fusion joined with each other by brazing without requiring filler material and connection between other remaining elements such as brackets is configured by welding such as laser welding.

5. The heat exchanger system (100) as claimed in claim 1, wherein said multi layered laminar structure (10) configuring at least few elements of said heat exchanger system (100) is so configured that said aluminum core (1) along with said at least one protective layer (2) is sandwiched between said brazing layers (3).

6. The heat exchanger system (100) as claimed in claim 1, wherein said multi layered laminar structure (10) configuring at least few elements of said heat exchanger system (100) is so configured that said protective layer (2) is laminated on either one of the major surfaces (1a) and (1b) of said aluminum core (1) and said aluminum core (1) along with said protective layer (2) is sandwiched between said brazing layers (3).

7. The heat exchanger system (100) as claimed in claim 1, wherein said multi layered laminar structure (10) configuring at least few elements of said heat exchanger system (100) is so configured that protective layer (2) is laminated on both the opposite major surfaces (1a) and (1b) of said aluminum core (1) and said aluminum core (1) along with said protective layers (2) is sandwiched between said brazing layers (3).

8. A heat exchanger system (200) as claimed in any of the preceding claims comprising a heat exchanger core formed by fusion joining plates (122) and fin elements (130) by brazing without requiring filler material, wherein each plate (122) is formed from said multi-layered laminar structure (10) and said heat exchanger core so formed is received inside an enclosure configured by fusion joining said auxiliary elements (140) by brazing.

9. A method for manufacturing a heat exchanger system (100), said method comprising the steps of:
• forming at least one of said tubular elements (22), fin elements (30) and auxiliary elements (40) from said multi-layered laminar structure (10), specifically, configuring said tubular element (22) by forming said multi-layered laminar structure (10) and fusion joining end portions of said multi-layered laminar structure (10) by electro welding;
• arranging said tubular elements (22), said fin elements (30) and said auxiliary elements (40) in a desired pre-weld configuration in which these elements are to be fusion joined with respect to each other, such that brazing layers (3) of said multi-layered laminar structure (10) from which at least one of said abutting elements are configured of facilitate forming of fusion joint between the abutting elements when subjected to heat; and
• subjecting said heat exchange elements (22), said fin elements (30) and said auxiliary elements (40) arranged in said pre-weld configuration to a Controlled Atmosphere Brazing, such that said brazing layers (3) fuse by heat for forming fusion joints between said abutting elements in one go.

10. The method for manufacturing a heat exchanger system (100) as claimed in claim 9, wherein the step of arranging said tubular elements (22), said fin elements (30) and said auxiliary elements (40) in said desired pre-weld configuration further involves intermediate steps of fin insertion, tube fluxing, core stacking and assembly.

11. The method for manufacturing a heat exchanger system (100) as claimed in claim 9, wherein the method involves the steps of forming at least one of plates (122), fin elements (30) and auxiliary elements (40) from said multi-layered laminar structure (10), arranging said plates (122) along with said fin elements (30) and said auxiliary elements (40) in a desired pre-weld configuration in which these elements are to be fusion joined with respect to each other such that brazing layers (3) of said multi-layered laminar structure (10) from which at least one of said abutting elements are configured of facilitate forming of fusion joint between the abutting elements when subjected to heat and subjecting said plates (122), said fin elements (30) and said auxiliary elements (40) arranged in said pre-weld configuration to a Controlled Atmosphere Brazing, such that said brazing layers (3) fuse by heat for forming fusion joints between said abutting elements in one go.
